# EUROPÄISCHE PATENTSCHRIFT

(11) **EP 3 380 665 B1**
(45) Veröffentlichungstag und Bekanntmachung des Hinweises auf die Patenterteilung: **01.05.2019**
(21) Anmeldenummer: 17801451.0
(22) Anmeldetag: 20.11.2017
(51) Int. Cl.: D21C 5/00, D21H 11/12

(54) **VERFAHREN ZUR HERSTELLUNG VON PAPIER, KARTON ODER PAPPE UNTER VERWENDUNG VON BAOBABBAUMRINDENBASTFASERN, BAOBABFRUCHTFASERN UND NATALFEIGENBASTFASERN ALS PAPIERROHSTOFF**
METHOD FOR PRODUCING PAPER, CARDBOARD, OR PAPERBOARD USING BAOBAB TREE BARK BAST FIBERS, BAOBAB FRUIT FIBERS, AND NATAL FIG BAST FIBERS AS PAPERMAKING RAW MATERIALS
PROCÉDÉ DE FABRICATION DE PAPIER, DE CARTON OU DE CARTON-PÂTE PAR UTILISATION, COMME MATIÈRE PREMIÈRE POUR PRODUIRE DU PAPIER, DE FIBRES LIBÉRIENNES D'ÉCORCE DE BAOBAB, DE FIBRES DE FRUIT DE BAOBAB ET DE FIBRES LIBÉRIENNES DE FICUS NATALENSIS

(30) Priorität: 21.11.2016 DE 102016222952
(43) Veröffentlichungstag der Anmeldung: 03.10.2018
(73) Patentinhaber: Hope Tree International GmbH, 82538 Geretsried (DE)
(72) Erfinder: DINZINGER, Lambert Dustin, 82538 Geretsried-Gelting (DE)
(74) Vertreter: Grund, Martin
(86) Internationale Anmeldenummer: PCT/EP2017/079806
(87) Internationale Veröffentlichungsnummer: WO 2018/091711

(56) Entgegenhaltungen:
- AT-B- 319 742
- DE-T2- 69 830 397
- FR-A- 369 657
- GB-A- 190 413 158
- SCA: "Papierherstellung", publicationpapers.sca.com , 1. April 2010 (2010-04-01), Seiten 1-16, XP002777618, Gefunden im Internet: URL:https://www.sca.com/globalassets/pappe r/media/brochyrer/papermaking-ger [gefunden am 2018-01-25]

## Beschreibung

### GEBIET DER ERFINDUNG

Die vorliegende Erfindung gehört zum Gebiet der Papierherstellung und betrifft ein Verfahren zur Herstellung von Papier, Karton oder Pappe unter Verwendung von Baobabbaumrindenbastfasern und Baobabfruchtfasern als Baobabrohstoff, sowie das durch dieses Verfahren erhaltene Papier. Ebenso betrifft die Erfindung Verfahren, die Baobabrohstoff und Natalfeigenrohstoff kombinieren. Die Erfindung bezieht sich außerdem auf die Verwendung jenes Papiers, Kartons oder Pappe für die Weiterverarbeitung zu Papierprodukten. Bei der Gewinnung des Baobabrohstoffs oder Natalfeigenrohstoffs wird ein Absterben des Baumes vermieden. Als Rohstoff für die Verarbeitung von handgeschöpften und maschinell hergestelltem Baobab- oder Natalfeigenpapier, -karton oder -pappe werden reine Baobabbaumrindenbastfasern, Baobabfruchtfasern und/oder Natalfeigenbastfasern verwendet. Das durch das hierin beschriebene Verfahren hergestellte Papier, Karton oder Pappe kann weitere Papierfasern umfassen, die aus konventionellen Papierrohstoffen oder Altpapier gewonnen wurden. Das Papier, der Karton und die Pappe, die durch das erfindungsgemäße Verfahren hergestellt wurden, zeichnen sich durch ihre erhöhte Reißfestigkeit gegenüber aus konventionellen Papierrohstoffen hergestelltem Papier, Pappe oder Karton aus. Das Papier, die Pappe und der Karton sind biologisch abbaubar.

### HINTERGRUND DER ERFINDUNG

Gegenwärtig finden zahlreiche Herstellungsverfahren für Papier, Karton und Pappe Anwendung, die zum Zwecke des Rohstoffgewinns Pflanzenmaterial verwenden, was ein Sterben der Pflanze bzw. des Baumes bedingt. Obwohl in solchen Herstellungsverfahren nachwachsende Rohstoffe verwendet werden, wirken diese Verfahren dem Erhalt unseres Ökosystems und letztlich unseres Planeten entgegen, da die Zeit des Nachwachsens, also die Regeneration des Pflanzenmaterials, meist Jahrzehnte dauern kann. Somit kann der gegenwärtige Papierbedarf nicht mit der Beibehaltung eines für das ökologische Gleichgewicht relevanten Pflanzenbestandes gedeckt werden, wenn solche konventionellen Herstellungsverfahren angewandt werden, auch wenn nachwachsende Rohstoffe verwendet werden. Deshalb ist Altpapier heute eines der Hauptbestandteile bei der Herstellung von Papier, Karton und Pappe. Auch in Europa ist die Verwendung von Altpapier weit verbreitet und ein hoher Anteil von Altpapier wird dort in der Papierindustrie für die Herstellung von neuem Papier verwendet. Da sich die Zellstrukturen des Altpapiers bei jedem neuen Bearbeitungsprozess verschlechtern und verkleinern, kann Altpapier allerdings nicht unendlich oft wiederverwendet werden. Deshalb müssen die aus Altpapier gewonnenen Faserstoffe mit frischen und neuen Faserstoffen aus konventionellen Rohstoffquellen (wie (z.B. Fichten-, Tannen-, Kiefern-, Lärchen-, Buchen-, Pappel-, Birken-, und Eukalyptusholz) vermischt bzw. substituiert werden. Durch den Einsatz frischer Faserstoffe werden die gewünschten und gezielten Eigenschaften des zu erzeugenden Papiers gesteuert. Die Papierindustrie ist mit der sozioökonomischen Entwicklung und dem Lebensstandard der Menschen eng verbunden. Mit der rasanten wirtschaftlichen Entwicklung und dem Ansteigen des Lebensstandards der Menschen und dem damit verbundenen Papierbedarf erhöhte sich die Papierproduktion deshalb dramatisch. Der Bedarf eines Verfahrens für die Papier-, Karton- und Pappeherstellung, das auf schnell regenerierenden Rohstoffen basiert und die Umweltschädigung nachhaltig reduziert, ist deshalb groß.

Die Verwendung des vom Baobabbaum gewinnbaren hellbeigen bis hellbraunen Faserstoffs bietet der Papier-, Karton- und Pappe-Herstellungsindustrie eine revolutionäre Veränderung, da der Faserstoff ohne ein Roden bzw. das Sterben der Bäume gewonnen werden kann. Da der Rohstoff ohne Fällen des Baobabbaumes einfach durch Schälen des schnell regenerierenden Baobabbaumrindenbasts oder der Baobabfrucht erhalten werden kann, ist das hierin bereitgestellte Papier-, Karton- und Pappe-Herstellungsverfahren zu 100% pflanzenschonend und bedarf keines Abtötens des Baumes. Zudem entfallen im Vergleich mit konventionellen Herstellungsverfahren viele chemische Aufbereitungsschritte. Beispielsweise muss im Gegensatz zur konventionellen Holzstoffverwendung kein Lignin entfernt werden, dessen Entfernung des Einsatzes umweltschädlicher und letztlich den Endverbraucher schädigender Chemikalien bedarf.

Da das Verfahren somit der weltweiten Abholzung für die Herstellung von Papier, Pappe und Karton entgegenwirkt und zudem weniger umweltschädliche Chemikalien im Herstellungsprozess verwendet werden müssen, wird die Umwelt durch das erfindungsgemäße Verfahren weniger belastet und nachhaltig geschützt. Darüber hinaus zeichnen sich die vom Baobabbaum gewonnen Bastfasern und Fruchtfasern durch ihre höhere Stärke und Reißfestigkeit im Vergleich zu anderen Holzfasern aus. Schließlich enthält Baobabbaumrindenbast einen höheren Anteil an Fasern als die gleiche Menge an Holz. Daher eignen sich die vom Baobabbaum gewonnenen Faserstoffe perfekt für die Verarbeitung zu Papier, Pappe und Karton.

Letztlich ist zu erwähnen, dass der Baobabbaum der Mittelpunkt kultureller, wirtschaftlicher und gesellschaftlicher Bereiche vieler Menschen ist. Beispielsweise ist in Afrika die Baobabfrucht mit ihrem Samen und dem Fruchtfleisch ein wertvolles Nahrungsmittel. Der besondere Stellenwert des Baobabbaumes wird zudem durch die Bezeichnung "Apothekerbaum" verdeutlicht, die auf dem weitgefächerten medizinischen Einsatz seiner Teile beruht. Beispielsweise werden Fieber, Ruhr, Pocken und Masern mit Extrakten aus Fruchtfleisch und Samen bekämpft, auch dient er als Gegenmittel bei Verletzungen durch Giftpflanzen der Gattung *Strophantus,* die in Afrika in vielen Gegenden beheimatet sind.

Der Baum kann das Zentrum eines Dorfes bilden und Schauplatz eines Markts und gesellschaftlicher Ereignisse sein. Eine Weiterentwicklung zur Massennutzung dieses vom Baobabbaum gewonnen Rohstoffes würde somit die wirtschaftliche Situation der Menschen verbessern.

Ebenso wie die Fasern des Baobabbaums können auch Bastfasern der Natalfeige oder "Mutuba" (*Ficus natalensis*) zur Herstellung von Papier, Karton oder Pappe verwendet werden. Die Natalfeige ist in Ostafrika südlich des Äquators bis Südafrika verbreitet. In Uganda zum Beispiel wird der Baum als Bastfaserlieferant für die Rindentuchherstellung kultiviert. Seit Jahrhunderten wird die Rinde dieser Baumart geerntet und zu einem hauchdünnen Rindentuch verarbeitet, lange bevor arabische Händler die Baumwolle nach Ostafrika brachten.

Die Natalfeige gehört zur Familie der Maulbeerbaumgewächse. Strauchformen und bis zu 30 Meter hohe Bäume mit Brettwurzeln und mächtiger Krone gehören zum Erscheinungsbild.

Die Bäume dienen als Schattenspender für Feldfrüchte und Haustiere, schützen windempfindliche Bananenstauden, liefern Holz zum Kochen und die Blätter werden als Nahrung für die Tiere verwendet. Einige Bauern pflanzen gezielt den Baum für die Gewinnung der Bastfaser.

Bereits nach zwei bis fünf Jahren kann die Rinde des zwei bis fünf Meter langen Stammes zum ersten Mal geerntet werden. Dies ist einmal im Jahr möglich. Beim Entfernen der Rinde tritt an den Schnittstellen Milchsaft aus und das freigelegte Kambium wird sehr schnell von einer braunen, dicken Flüssigkeit geschützt. Die Rinde wird maximal bis 2/3 der Stammeslänge geerntet. Nach einigen Monaten ist der Stamm wieder komplett von rotbraunen Faserbündeln umschlossen und geschützt. Das Ernten der Rinde und der rötlich-braunen Bastfaser ist mehrere Jahrzehnte (bis zu 40 Jahre) hinweg ohne Schädigung des Baumes möglich.

Am besten wird die Rinde während der Regenzeit und bei ausgewachsenen Blättern geerntet, da in dieser Phase der Saft- und Latexstrom im Kambium und Phloem (Bast) am stärksten ist. Das Ablösen der Rinde ist in dieser Zeit leichter möglich und die Regeneration der Bastschicht am schnellsten. Somit wird ein Sterben des Baumes vermieden. Zur Förderung der Rindenbildung wird der Stamm mit Bananenblättern umwickelt und der obere Rand geglättet.

GB 1904/13158 A, FR 369657 A, DE 69830397 T2 und AT 319742 B erwähnen die Möglichkeit der Herstellung von Papier aus oder unter Zugabe von Bastfasern von Baobabbäumen.

### ZUSAMMENFASSUNG DER ERFINDUNG

Hierin bereitgestellt wird ein Verfahren zur Herstellung von Papier, Karton oder Pappe. Das Verfahren umfasst die folgenden Schritte:
a) Gewinnung von Baobabfruchtfaser und Baobabbaumrindenbastfaser und/oder Natalfeigenbastfaser als Baumrohstoff, wobei der Baumrohstoff mindestens 5% Baobabfruchtfaser enthält,
b) Zerfasern des Baumrohstoffs aus Schritt a) unter Zugabe von Wasser,
c) Erhitzen und vorzugsweise Bleichen des in Schritt b) erhaltenen Faserbreis,
d) Aufbringen des Faserbreis auf ein Siebmittel einschließlich Entfernen eines Teils des zugeführten Wassers, um ein Papierfaservlies zu erzeugen,
e) Pressen des in Schritt d) erhaltenen Papierfaservlieses, um ein Papierblatt zu erhalten, und
f) Trocknen des in Schritt e) erhaltenen Papierblatts.

Hierin bereitgestellt ist ferner ein Verfahren, bei dem der Baumrohstoff aus Schritt a) von einem oder mehreren Baobabbäumen gewonnen wird, die der Art *Adansonia grandidieri, Adansonia madagascariensis, Adansonia perrieri, Adansonia rubrostipa (Adansonia fony), Adansonia suarezensis, Adansonia Za., Adansonia digitata, Adansonia kilima,* oder *Adansonia gregori (Adansonia gibbosa)* angehören. Die Baobabbaumrindenbastfaser wird durch Schälen des Baobabbaumrindenbasts (einschließlich der Borke) vom Baobabbaum gewonnen. Die Baobabfruchtfaser wird durch Verarbeitung der Baobabfrucht erhalten. Die Rohstoffgewinnung hat kein Absterben des Baobabbaumes zur Folge.

Hierin bereitgestellt ist ferner ein Verfahren, bei dem der Baumrohstoff aus Schritt a) von einem oder mehreren Natalfeigenbäumen gewonnen wird. Die Rohstoffgewinnung hat kein Absterben des Natalfeigenbaumes zur Folge.

Hierin bereitgestellt ist ferner ein Verfahren, das ausschließlich Baobabfruchtfaser als Rohstoff verwendet. Das mit dem erfindungsgemäßen Verfahren hergestellte Papier, Karton oder Pappe enthält somit keine anderen Faserstoffe. Alternativ kann der in Schritt a) gewonnene Baobabrohstoff mindestens 55%, 60%, 70%, 75%, 80%, 85%, 90% oder 95% Baobabbaumrindenbastfaser enthalten. Der in Schritt a) gewonnene Baobabrohstoff kann mindestens 5%, 10%, 15%, 20%, 25%, 30% oder mehr Baobabfruchtfaser enthalten. Das Verfahren kann ausschließlich Baobabfruchtfasern als Baobabrohstoff verwenden.

Hierin bereitgestellt ist ferner ein Verfahren, das ausschließlich Baobabfruchtfaser als Rohstoff verwendet.

Auch sind Verfahren bereitgestellt, die eine Kombination aus Baobabbaumrindenbastfaser und Baobabfruchtfaser als Rohstoff verwenden. Ferner sind Verfahren bereitgestellt, die eine Kombination aus Baobabbaumrindenbastfaser, Baobabfruchtfaser und Natalfeigenbastfaser als Rohstoff verwenden. Ebenso sind Verfahren bereitgestellt, die eine Kombination aus Baobabfruchtfaser und Natalfeigenbastfaser als Rohstoff verwenden.

In einer weiteren Ausführungsform können dem Verfahren Faserstoffe zugemischt werden, die aus konventionellen Papierrohstoffen (primäre Faserstoffe) und/oder Altpapier (sekundäre Faserstoffe) stammen. Primäre Faserstoffe können dabei von einem oder mehreren aus Fichten-, Tannen-, Kiefern-, Lärchen-, Buchen-, Pappel-, Birken-, und Eukalyptusholz sowie Baumwolle gewonnen werden. Das Beimischen jener konventionellen Papierrohstoffe und/oder Altpapier bzw. das Beimischen des daraus gewonnen Faserbreis kann von einem der Schritte b) - d) umfasst sein. Das erfindungsgemäße Verfahren kann somit Mischungen von Baobabfaserstoffen (Baobabbaumrindenbastfasern und/oder Baobabfruchtfasern) und primären und/oder sekundären Faserstoffen aus konventionellen Papierrohstoffen umfassen. Das Verhältnis von Baobab- und/oder Natalfeigenfaserstoffen zu konventionellen Faserstoffen im Fasergemisch kann dabei 9,5:0,5, 9:1, 8:2, 7:3, 6:4, 1:1, 4:6, 3:7, 2:8, 1:9 oder 0,5:9.5 sein. Der Baobabfaserstoffanteil kann dabei mindestens 55%, 60%, 70%, 75%, 80%, 85%, 90% oder 95% Baobabbaumrindenbastfasern enthalten. Der Baobabfaserstoffanteil kann dabei mindestens 5%, 10%, 15%, 20%, 25%, 30%, 40%, 45% oder mehr Baobabfruchtfasern enthalten. Der Baobabfaserstoffanteil kann auch ausschließlich Baobabfruchtfasern enthalten.

Je höher der Gehalt an Baobabfruchtfasern ist, desto höher ist die Reißfestigkeit des Papiers. Zugleich wird das Papier mit steigendem Gehalt an Baobabfruchtfasern schwerer.

Das erfindungsgemäße Verfahren kann im Falle der Verwendung konventioneller Faserstoffe innerhalb des Schritts c) weiter die Entfernung von Lignin umfassen.

Das hierin bereitgestellte Verfahren kann aber in jedem Fall auch keine Entfernung von Lignin umfassen.

In einer Ausführungsform kann Schritt c) weiter Zumischen von Hilfsmitteln umfassen, wie Füllstoffen, Leimstoffen, Farbstoffen oder speziellen Hilfsstoffen.

Das hierin bereitgestellte Verfahren kann weiter einen Schritt g) umfassen, der die Veredelung des Papiers durch Satinieren, Streichen, Prägen, Beschichten und/oder Kaschieren umfasst. Ferner kann Schritt g) die Weiterverarbeitung des in Schritt f) erhaltenen Papierfaserprodukts zu Pappe oder Karton umfassen.

In einem weiteren Aspekt stellt die Erfindung Papier, Karton oder Pappe bereit, dass durch eines der oben beschrieben Verfahren erhalten wurde. Das Papier, die Pappe oder der Karton zeichnet sich dabei durch eine höhere Reißfestigkeit gegenüber Papier, Pappe oder Karton aus, das keine Baobabbaumrindenbastfasern, Baobabfruchtfasern und/oder Natalfeigenbastfasern enthält.

Die Papierfaser des mit dem erfindungsgemäßen Verfahren hergestellten Papiers, Kartons oder Pappe kann dabei ausschließlich aus Baobabbaumfaserstoffen bestehen. Der Baobabbaumfaserstoffanteil kann ferner mindestens 5%, 10%, 20%, 30%, 40%, 50%, 55%, 60%, 70%, 80%, 90% oder 95% Baobabbaumrindenbastfasern enthalten. Der Baobabbaumfaserstoffanteil kann ferner mindestens 5%, 10%, 15%, 20%, 25%, 30%, 40%, 45%, 50% oder mehr Baobabfruchtfaser enthalten. Der Baobabbaumfaserstoffanteil kann ausschließlich Baobabfruchtfaser enthalten.

Die Papierfaser des mit dem erfindungsgemäßen Verfahren hergestellten Papiers, Kartons oder Pappe kann aus mindestens 5%, 10%, 20%, 30%, 40%, 50%, 60%, 70%, 80%, 90%, 95% oder mehr Baobabbaumfasern bestehen. Der Baobabbaumfaserstoffanteil kann ferner mindestens 5%, 10%, 20%, 30%, 40%, 50%, 55%, 60%, 70%, 80%, 90% oder 95% Baobabbaumrindenbastfasern enthalten. Der Baobabbaumfaserstoffanteil kann ferner mindestens 5%, 10%, 15%, 20%, 25%, 30%, 40%, 45%, 50% oder mehr Baobabfruchtfasern enthalten. Der Baobabbaumfaserstoffanteil kann ausschließlich Baobabfruchtfasern enthalten.

Die Papierfaser des mit dem erfindungsgemäßen Verfahren hergestellten Papiers, Kartons oder Pappe kann aus mindestens 5%, 10%, 20%, 30%, 40%, 50%, 60%, 70%, 80%, 90% oder 95% Natalfeigenbastfasern bestehen.

Die Verwendung von Natalfeigenbastfasern verleiht dem hergestellten Papier, den Kartons oder der Pappe eine höhere Reißfestigkeit.

Letztlich stellt die Erfindung die Verwendung des Papiers, des Kartons oder der Pappe zur Herstellung von Naturpapier, Pappmache, Kunstpapier, Hygienepapier, Taschentuchpapier, grafische Papiere, Papier, Karton, oder Pappe für Verpackungszwecke oder Papier für spezielle technische Verwendungszwecke bereit.

### AUSFÜHRLICHE BESCHREIBUNG

Das hierin bereitgestellte Verfahren bezieht sich auf die Verwendung von vom Baobabbaum gewonnen Rohstoffen (Baobabrohstoff) und/oder von vom Natalfeigenbaum gewonnenen Rohstoffen (Natalfeigenrohstoff) zur Herstellung von Papier, Karton oder Pappe.

Papier, Karton und Pappe sind flächige Werkstoffe, die aus untereinander gleichen Grundstoffen (Papierrohstoffen) und mit im Prinzip gleichen Fertigungsweisen hergestellt werden. Unterschieden werden sie hauptsächlich hinsichtlich der Masse je Flächeneinheit (Flächengewicht, g/m² Gewicht). Nach DIN 6730 beträgt bei Papier die Masse je Flächeneinheit (Flächengewicht) bis zu 225 g/m²; was darüber liegt, wird als Pappe bezeichnet. Die Bezeichnung Karton gibt es zwar offiziell nicht, jedoch spricht man im deutschen Sprachgebrauch von Papier, wenn das Flächengewicht zwischen 7 und 150 g/m² liegt, von Karton zwischen 250 und 500 g/m² und von Pappe, wenn es über 600 g/m² liegt. Die Bereiche 150 - 250 g/m² und 500 - 600g/m² sind begriffsunsicher, d. h. es kann die Bezeichnung Papier und Karton sowie Karton und Pappe verwendet werden. Meist wird jedoch die Stärke ausschlaggebend sein. Die Begriffe Papier, Karton und Pappe wie hierin verwendet umfassen alle flächigen aus Fasern pflanzlicher Herkunft bestehenden Werkstoffe, die sowohl von der Definition nach DIN 6730 wie auch vom beschriebenen deutschen Sprachgebrauch umfasst werden.

Der hierin verwendete Begriff "Rohstoffe" hat die für den Fachmann auf dem Gebiet der Papierherstellung übliche Bedeutung und umfasst alle konventionellen und im Stand der Technik bekannten Ausgangsstoffe zur Papierherstellung. Als Rohstoffe für die Papierherstellung sind somit alle Faserstoffe, wie z.B. Holzschliff, Halbzellstoffe, Zellstoffe, Altpapier und andere Faserstoffe umfasst. Darüber hinaus umfasst der Begriff die Veredlungsprozesse wie Leimung und Imprägnierung. In diesen Vorgängen werden Rohstoffe wie z.B. tierische Leime, Harze, Paraffine und Wachse, Füllstoffe wie Kaolin, Talkum, Gips, Bariumsulfat, Kreide, Titanweiß und Hilfsstoffe, wie z.B. Farbstoffe, Entschäumer, Dispergiermittel, Retentionsmittel, Flockungsmittel und Netzmittel, abhängig vom Anwendungsbereich des Endproduktes, verwendet.

Als "Faserstoff" wird aus Pflanzen gewonnenes Fasermaterial (Pflanzenfaser) bezeichnet. Der Begriff umfasst sowohl primäre Faserstoffe, also erstmals in der Produktion eingesetzte Rohstoffe, wie auch sekundäre Faserstoffe, also nach dem Gebrauch noch einmal dem Produktionsprozess zugeführte Recyclingstoffe, wie beispielsweise Altpapier. Die wichtigsten Faserstoffbestandteile sind die aus Cellulose bestehenden Anteile. Daneben ist auch Lignin ein Faserstoffbestandteil. Holzstoffe, wie z. B. Holzschliff, enthalten große Anteile an Lignin. Bei Halbzellstoffen ist der Ligninanteil reduziert, so dass der Celluloseanteil dominiert. Zellstoff hingegen besteht fast ausschließlich aus Cellulose. Diese Faserstoffe werden meist durch mechanische oder chemisch-mechanische Verfahren aus Holz hergestellt und vor allem für die Herstellung von Papier für unterschiedliche Zwecke bzw. in unterschiedlichen Qualitäten, für Pappe und Kartonagen verwendet.

"Baobabrohstoff", wie hierin verwendet, bezieht sich auf vom Baobabbaum gewonnene Faserstoffe, die als Rohstoff zur erfindungsgemäßen Papier-, Karton- oder Pappeherstellung dienen. Der für den Rohstoffgewinn genutzte Baobabbaum, auch Affenbrotbaum genannt, ist eine Gattung großer, markanter und häufig bizarr wachsender Laubbäume aus der Unterfamilie der Wollbaumgewächse (Bombacoideae), die wiederum aus der Familie der Malvengewächse (Malvaceae) stammen. Die Affenbrotbäume sind in weiten Teilen des afrikanischen Kontinents, auf der Insel Madagaskar und in Australien verbreitet. Die zur Gewinnung von Baobabrohstoff verwendeten Baobabbäume umfassen die Arten *Adansonia grandidieri, Adansonia madagascariensis, Adansonia perrieri, Adansonia rubrostipa (Adansonia fony), Adansonia suarezensis, Adansonia Za., Adansonia digitata, Adansonia kilima,* oder *Adansonia gregori (Adansonia gibbosa).* Die Erfindung beruht auf der Verwendung der vom Baobabbaum gewonnenen Pflanzenfasern. Als Baobabrohstoff sind dabei insbesondere die vom Baobabbaum gewonnenen Bastfasern der Rinde (Baobabbaumrindenbastfasern) und Fasern der Früchte (Baobabfruchtfasern) umfasst. Der Bast ist das lebende Gewebe unter der Borke (äußerste Schicht) von Bäumen und anderen verholzten Pflanzen (sekundäres Phloem). Die Baobabbaumrindenbastfasern sind in der zweiten Schutzschicht der Rinde zu finden. Da der Baobabbaumrindenbast und die Borke innerhalb eines Jahres, meist nach 6-8 Monaten, regenerieren, hat die Gewinnung des Baobabbaumrindenbasts kein Absterben des Baumes zur Folge.

"Natalfeigenrohstoff", wie hierin verwendet, bezieht sich auf vom Natalfeigenbaum (*Ficus natalensis*) gewonnene Faserstoffe, die als Rohstoff zur erfindungsgemäßen Papier-, Karton- oder Pappeherstellung dienen.

"Baumrohstoff", wie hierin verwendet, ist ein Rohstoff, der Baobabrohstoff und/oder Natalfeigenrohstoff umfasst.

Das hierin bereitgestellte Verfahren umfasst zunächst die Gewinnung des Baumrohstoffs, bzw. der Baobabbaumrindenbastfasern, Baobabfruchtfasern und/oder Natalfeigenbastfasern.

Um an die Bastschicht des Baobabbaumes zu gelangen, werden bevorzugt gängige Verfahren angewandt. Damit der Baum keine Schäden erleidet und Rinde nachwachsen bzw. sich regenerieren kann, werden hierfür keine schweren und großen Maschinen verwendet. In die Baumrinde werden mit üblichen, hierfür geeigneten Schneidewerkezeugen, wie beispielsweise geschmiedeten Macheten und Sägen, 1-30 mm tiefe Einkerbungen per Hand geschnitten. Die Höhe der Einkerbungen ist von der Baumgröße abhängig. Von diesen Einkerbungen aus werden die Rinde und die Bastfasern abgezogen. Die bis zu 25 Meter langen Bastfasern werden in Handarbeit und unter Verwendung von geschmiedeten Macheten und Sägen von der Rinde getrennt und gesondert gelagert. Um an die Baobabfruchtfasern zu gelangen, muss zunächst die Baobabfrucht geerntet und anschließend aufgebrochen werden. Das Aufbrechen der Frucht kann durch jede vorstellbare Art und Weise erfolgen, die den Erhalt des Fruchtinneren schont. Beispielsweise können die Früchte mit einem Hammer bzw. harten Schlagwerkzeug aufgebrochen werden. Die Fasern befinden sich unterhalb der Schale im Inneren der Frucht und verbinden das Fruchtfleisch mit der Innenseite der Schale. Zudem versorgen sie das Furchtfleisch mit den notwendigen Nährstoffen. Nach dem Aufbrechen der Fruchte können die Fruchtfasern von der Schale per Hand getrennt und gesondert gelagert werden.

Um an die Bastschicht des Mutubabaumes zu gelangen, werden bevorzugt gängige Verfahren angewandt. Damit der Baum keine Schäden erleidet und Rinde nachwachsen bzw. sich regenerieren kann, werden hierfür keine schweren und großen Maschinen verwendet. In die Baumrinde werden mit üblichen, hierfür geeigneten Schneidewerkezeugen, wie beispielsweise geschmiedete Macheten und Sägen, 1-30 mm tiefe Einkerbungen per Hand geschnitten. Die Höhe der Einkerbungen ist von der Baumgröße abhängig. Von diesen Einkerbungen aus werden die Rinde und die Bastfasern abgezogen. Die bis zu 25 Meter langen Bastfasern werden in Handarbeit und unter Verwendung von geschmiedeten Macheten und Sägen von der Rinde getrennt und gesondert gelagert.

Der so gewonnene Baumrohstoff wird anschließend für die Weiterverarbeitung unter Zugabe von Wasser zerfasert. Die Zerfaserung kann durch alle im Stand der Technik bekannten Verfahren erfolgen. Sie kann mechanisch, thermomechanisch oder chemisch erfolgen. Im Schliff-Verfahren wird der Baobabrohstoff beispielsweise mit Hilfe von Schleifsteinen mechanisch zerfasert. Alternativ kann die Zerfaserung unter Verwendung eines Mahlwerks oder einer Hammermühle bewerkstelligt werden. Beim sog. Refiner-Verfahren erfolgt zunächst eine Zerkleinerung in Hackschnitzel und, nach weiteren Prozessschritten, die Zerfaserung im Refiner (thermomechanisch). Der Grad der Zerfaserung bestimmt wesentliche Eigenschaften des daraus hergestellten Papiers, Kartons oder Pappe. Je länger die Fasern sind, umso fester wird das entstehende Produkt.

Das bereits während der Zerfaserung begonnene Einweichen der Fasern wird anschließend in einem weiteren Arbeitsschritt fortgeführt. Dabei wird der bei der Zerfaserung gewonnene Faserbrei (Pulpe) erhitzt. Das Erhitzen erfolgt dabei auf mindestens 80°C, 85°C, 90°C, 95°C, 100°C, 105°C, 110°C, 115°C, 120°C oder mehr. Der Faserbrei kann beispielsweise auf zwischen 80°C und 120°C, 85°C und 120°C, 90°C und 115°C und 95°C und 115°C erhitzt werden. Das Erhitzen erfolgt vorzugsweise durch Kochen des Faserbreis, also dem Erhitzen bis zum und um den Siedepunkt. Der Temperaturbereich zum Lösen der Fasern erstreckt sich von 30°C bis 350°C. Der bevorzugte Temperaturbereich liegt zwischen 95°C und 115°C in kochendem Wasser. Das Erhitzen erfolgt bei mindestens 1, 1,5, 2, 2,5, 3, 3,5, 4, 4,5, 5 oder mehr bar. Das Erhitzen erfolgt für mindestens 30, 60, 90, 120, 150, oder 180 min. und kann sich bis zu 72 h erstrecken. Das Erhitzen umfasst vorzugsweise weiter das Bleichen des Faserbreis. Das Bleichen kann mit Hilfe aller im Stand der Technik bekannten Bleichmittel erfolgen. Als Bleichmittel können Oxidations- (oxidative Bleiche) und Reduktionsmittel (reduktive Bleiche) eingesetzte werden. Zur Bleiche geeignete Oxidationsmittel umfassen Sauerstoff, Peroxide wie Wasserstoffperoxid, Perborate, Percarbonate, Peroxyessigsäure sowie Chlorverbindungen wie Chlor, Hypochlorite und Chlordioxid. Geeignete Reduktionsmittel umfassen Dithionite und Schwefeldioxid. Für die Herstellung von weißem Papier werden die Fasern mit Wasserstoffperoxid (H₂O₂) gebleicht. Die Konzentration des Bleichmittels erstreckt sich von 3 bis 99 Prozent. Bevorzugt wird eine 7-10% Lösung verwendet. Das Bleichen erfolgt im Vorbehandlungsschritt des Erhitzens und Lösens der Fasermaterialien. Des Weiteren sind weitere Bleichmittel verwendbar. Die Bleiche kann durch Bleichmittel wie Ammoniak (NH₃), Natronlauge (NaOH), Oxalsäure (auch genannt Ethandisäure oder Kleesäure C₂H₂O₄), Sauerstoffbleiche, Chlordioxid (ClO₂), Hypochlorit (ClO⁻) und elementarem Chlor (Cl) durchgeführt werden. Die nachhaltigere und umweltschonendere, aber preislich höher liegende Variante mit Wasserstoffperoxid (H₂O₂) wird bevorzugt angewendet.

Nach der Bleiche können dem Faserbrei wahlweise Hilfsmittel zugegeben werden. Hilfsmittel sind nichtfaserige Zusatzstoffe für die Papierherstellung, die dem Papier, Karton oder Pappe spezielle Eigenschaften verleihen, die durch Faserstoffe alleine nicht erreichbar sind. Solche Hilfsmittel umfassen Füllstoffe, Leimstoffe, Farbstoffe sowie spezielle Hilfsstoffe. Unter Füllstoffen versteht man weiße, wasserunlösliche Verbindungen (Pigmente) von kleinster Teilchengröße. Sie dienen dazu, die winzigen Zwischenräume zwischen den verfilzten Fasern auszufüllen. Als Füllstoffe werden in der Regel Mineralstoffe, wie z. B. Kaolin, Talkum, Gips, Calciumcarbonat, Bariumsulfat, Kreide, Titanweiß oder Stärke eingesetzt. Der Gehalt kann bis zu 30 % betragen. Leimstoffe sind Naturharze, Kunstharze, Wachse, Bindemittel, Paraffine oder Stärke, die der Papiermasse zugegeben werden, um die Saugfähigkeit herabzusetzen. Werden die Leimstoffe direkt dem Papierbrei zugeführt, spricht man von Leimung im Stoff (Stoffleimung oder Masseleimung). Werden dagegen die Leimstoffe erst in der Papiermaschine auf die Papierbahn (Papierfaservlies) gebracht, spricht man von Oberflächenleimung. Farbstoffe werden dem Papierbrei beigefügt, um das Papier zu färben und besondere Farbeffekte bei den Bunt- und Ausstattungspapieren zu erzielen. Auch weiße Papiere werden oft bläulich getönt, um den leichten Gelbstich vieler Faserstoffe zu überdecken und dadurch den Weißegrad zu erhöhen. Wie bei der Leimung, so können auch die Farbstoffe entweder dem Papierbrei zugegeben werden (man spricht dann von Stofffärbung) oder auf die fertige Papierbahn (Papierfilz/Papiervlies) aufgebracht werden, was als Oberflächenfärbung bezeichnet wird. Spezielle Hilfsstoffe können optische Aufheller sein. Sie verwandeln unsichtbare Ultraviolettstrahlung in sichtbares blaues Licht, wodurch das Papier heller und weißer erscheint. Andere Hilfsstoffe können die Aufgabe haben, Papier flammsicher zu machen oder es vor Insekten- oder Pilzbefall zu schützen. Das/die Hilfsmittel werden den erhitzen und gebleichten Papierfasern zugegeben und zu einem homogen Gemisch verrührt (Papierbrei).

Der Faserbrei kann anschließend homogeniert werden.

Im nächsten Arbeitsschritt wird der Papierbrei nun auf ein Siebmittel aufgebracht. "Siebmittel" umfasst dabei jede Vorrichtung zum Trennen fester Stoffe nach dem Kriterium der Korngröße und/oder zum Trennen von Feststoff(en) und Flüssigkeit(en). Die Trennung erfolgt durch Aufbringen des Papierbreis auf den Siebboden oder Siebbelag, ein je nach Bedarf feineres oder gröberes Metall-, Textil-, oder Kunststoffgewebe, -gitter, -geflecht, -blech oder Ähnliches. Der Siebboden oder Siebbelag ist durch Perforationen charakterisiert. Der Begriff "Siebmittel" umfasst beispielsweise die bei der traditionellen Papierherstellung verwendeten Schöpfsiebe als auch die bei der maschinellen Papierherstellung verwendeten Siebbahnen oder Endlossiebe, gewebte Siebe, Spiralsiebe und Lang- oder Untersiebe. Das Aufbringen kann mit Hilfe der im Stand der Technik bekannten Mittel und Verfahren erfolgen. Beispielsweise kann das Aufbringen durch das Aufspritzen des Faserbreis über Düsen oder Schlitze einer Spritzeinrichtung auf das Siebmittel erfolgen. Dies ist auch durch das sog. Fallen, Schieben oder einen Rakelauftrag möglich. Auf dem Siebmittel lagern sich die Fasern neben- und aufeinander ab, während gleichzeitig im Siebmittel der Großteil des zugeführten Wassers abfiltriert wird. Dabei verfilzen sich die im Papierbrei enthaltenen Fasern zu einem groben Papierfaservlies. Dieser Vorgang wird auch als Blattbildung bezeichnet.

Das Papierfaservlies wird nun durch geeignete Pressmittel zu einem feineren Papierblatt gepresst. Zugleich wird dem Papierfaservlies beim Pressen weitere Flüssigkeit entzogen. "Pressen", wie hierin verwendet, bezieht sich auf die Anwendung mechanischer Kräfte, um das Papierfaservlies unter Druck zu entwässern. Geeignete Pressmittel sind: mechanischer Pressvorgang zwischen zwei Platten mit einem Pressdruck von 2 bis 4000 hPa; hydraulischer Pressvorgang zwischen zwei Platten mit einem Pressdruck von 2 bis 4000 hPa; pneumatischer Pressvorgang zwischen zwei Platten mit einem Pressdruck von 2 bis 4000 hPa; oder ein Zusammenwirken von den Dreien oder zwei aus den Dreien zwischen zwei Platten mit einem Pressdruck von 2 bis 4000 hPa. Bevorzugt wird ein Pressdruck von mindestens 16 hPa. Traditionelle Pressmittel bestehen aus mehreren aufeinanderfolgenden Pressen, in denen das Papiervlies mittels gegeneinandergepresster Walzen (z.B. aus Stahl, Granit oder Hartgummi) zwischen Filzen entwässert wird. Beispielhafte Pressmittel umfassen die klassischen Zwei-Walzen-Pressen, Mehrwalzen-Kompaktpressen und moderne, sogenannte "Schuhpressen", bei denen ein speziell geformter Pressschuh an die Gegenwalze gepresst wird. Der Pressvorgang verdichtet das Papiergefüge, die Festigkeit erhöht sich und die Oberflächengüte wird entscheidend beeinflusst.

Im nächsten Arbeitsschritt erfolgt die weitere Trocknung des Papierblatts. Hierzu wird das Papierblatt erwärmt und durch Verdunstung des noch verbliebenen Wassers getrocknet. Die Trocknung gibt den späteren Schrumpf und somit die Endabmessungen des Papierblatts an. Die Trocknung sorgt zusätzlich dafür, dass das Papier nicht mehr feucht ist und somit vor Schimmelbefall geschützt ist. Die Trocknung kann beispielsweise durch eine Anzahl dampfbeheizter Trockenzylinder erfolgen, die das Papierfaservlies bzw. Papierblatt durchläuft.

Wahlweise kann das Papierblatt anschließend nachbehandelt oder veredelt werden. Beim Satinieren wird hierbei das Papier beispielsweise mit Hilfe eines Kalanders weiter geglättet. Beim Streichen wird die Oberfläche mit einer aus Pigmenten (Kaolin, Kreide, Kalk, Satinweiß), Bindemitteln (Kunststoff-Dispersionen, Stärke oder Kasein) und/oder anderen im Stand der Technik bekannten Additiven bestehenden Streichfarbe ("Strich") veredelt. Das Papier bekommt eine geschlossene, glatte und stabile Oberfläche, wodurch eine bessere Qualität beim Druck erreicht wird. Das Papier kann zudem geprägt, also mit einer Struktur versehen werden. Die Oberfläche erhält ihr Aussehen mittels eines Prägekalanders, der eine gravierte Stahlwalze enthält. So entstehen Papiere, die gerippt, genarbt, geadert oder gehämmert sind. Eine weitere Form der Veredelung oder Oberflächenart ist das Beschichten, z. B. mit Kunststoffen oder Lacken, um das Papier oder den Karton wisch- und wasserfest oder sogar aromadicht zu machen. Die Veredelung umfasst außerdem das Kaschieren, z. B. das Zusammenfügen von Papier und Karton, Papier/Papier/Kunststoff- bzw. Metallfolien mit Papier, Karton oder Pappe.

### BEISPIELE

Die vorliegende Erfindung wird durch die nachfolgenden, nicht einschränkenden Beispiele detailliert beschrieben. Beispiele, die nicht in den Umfang der Ansprüche fallen, dienen nur veranschaulichenden Zwecken.

### Beispiel 1: Handgeschöpftes DIN A4 BAO - Kunstpapier für den Künstlerbedarf.

In diesem Beispiel wurde ein Baobab- (BAO)-Kunstpapier aus den Bastfasern der Rinde des Baobabbaumes hergestellt.

### Gewinnung der Baobabbaumrindenbastfasern und Kochen

Die Bastfasern der Rinde sind in der zweiten Schutzschicht der Rinde zu finden. Um an diese zweite Schicht heranzukommen, werden bevorzugt gängige Methoden verwendet. Damit der Baum keine Schäden erleidet und wieder Rinde nachwachsen kann, wurden hierfür keine schweren und großen Maschinen verwendet. In die Baumrinde wurden mit üblichen, hierfür geschmiedeten Macheten und Sägen bis zu 50 mm tiefe Einkerbungen per Hand geschnitten. Die Höhe der Einkerbungen war von der Baumgröße abhängig. Von diesen Einkerbungen aus wurden die Rinde und die Bastfasern abgezogen. Die bis zu zwei Meter langen Bastfasern wurden in Handarbeit unter Verwendung von Spezialwerkzeugen von der Rinde getrennt und gesondert gelagert. Die Bastfasern der Rinde wurden in einem Zerkleinerer zu feinen gleichgroßen Stücken (ca. 1 - 10 mm Streifen) geschnitten und in einem Auffangbecken gesammelt. Unbrauchbare Teile der Schale und weitere unerwünschte Elemente, wie Schlamm und Steine, wurden in einem Wasserbad von den benötigten Fasern getrennt.

### Zerfaserung und Kochen des erhaltenen Faserbreis

Die bereits aufgeweichten Zuschnitte wurden für dieses Beispiel im nächsten Arbeitsschritt in einem Wasserbad mit reichlich Wasser weiter weichgekocht und aufgeschlossen. Für dieses Beispiel waren 100g Rohmaterial der Fasern ausreichend. 100g der Zuschnitte wurden in einem Topf mit drei Liter deionisiertem Wasser aufbereitet und gekocht. Die Temperatur der Flüssigkeit wurde bis zum Kochen erhöht. Dadurch erhöhte sich die Geschwindigkeit des Erweichens und Lösens der Fasern untereinander deutlich. Das Erweichen erfolgte bereits ab einer Wassertemperatur von 50°C. Die bevorzugte Temperatur zum Lösen der Fasern lag zwischen 95°C und 115°C und oberhalb von 1 bar Druck im Topf. Die Aufbereitungszeit betrug unter diesen Bedingungen 60 bis 180 Minuten.

### Bleichen des Faserbreis

Zum gelösten und aufgekochten Faserbrei wurde anschließend zusätzlich Bleiche hinzugegeben. Bevorzugt sind umweltschonende Bleichmittel zu verwenden. Hier wurde Wasserstoffperoxid (H₂O₂) verwendet. Wasserstoffperoxid ist in Wasser gelöst eine sehr schwache Säure und nicht umweltschädlich. Das Bleichen mit Wasserstoffperoxid war mit einer Lösung von 7% ausreichend. In den Topf wurden 100 ml einer 30%igen Lösung mit den drei Litern des oben hergestellten Faserbreis gegeben. Der die Bleiche enthaltende Faserbrei wurde nun zusätzlich aufgewärmt und gekocht. Dabei wurden dieselben Parameter von Zeit, Temperatur und Druck wie beim Aufkochen benutzt. Zur Weiterverarbeitung des Faserbreis wurde das Wasserstoffperoxid aus der Lösung komplett ausgewaschen. Der größte Anteil von Wasserstoffperoxid hatte sich aber bereits durch Lösung im Wasser und dem anschließenden Erhitzen zersetzt.

### Aufbringen des Faserbreis auf ein Sieb

Die weiß gebleichten Fasern wurden nun unter fließendem Wasser in einem Sieb ausgewaschen. Die ausgewaschenen Fasern wurden in ein Wasserbad gelegt und gleichmäßig mit einem Stab oder ähnlichem Gerät verrührt. Das Wasserbad enthielt eine Wanne (sog. Bütte) mit deionisiertem Wasser mit einer Temperatur von 20 bis 23°C. Die Wanne war frei von metallischen Materialien wie Aluminium oder Ähnlichem, da sonst chemische Reaktionen mit dem Restwasserstoffperoxid in den Fasern hätten entstehen könnten. Geeignet sind somit Wannen aus Kunststoff, vorzugsweise aus Polyethylen (PE). Im Anschluss erfolgte das Handschöpfen. Dafür wurde in übliches Schöpfsieb, Größe DIN A4 verwendet. Das Schöpfsieb wurde per Hand in die Bütte gesteckt. Beim Herausziehen des Siebes aus der Bütte wurde darauf geachtet, dass der komplette Siebbereich mit Fasern bedeckt und die Masse gleichmäßig überall verteilt war. Nach der Teilentwässerung verblieb auf dem Schöpfsieb ein grobes Papierfaservlies.

### Gautschen / Trocknen und Glätten des Papierfaservlieses

Das gesiebte Papierfaservlies wurde anschließend auf einen Filz gekippt, der mindestens die Abmessungen des Schöpfsiebes hatte. Üblicherweise ist er um ca. 20 % größer. Das gekippte Material wurde dann mit einem weiteren Filz bedeckt. Die Filze dienten zum Aufsaugen der überschüssigen Flüssigkeit aus dem Papier und somit gleichzeitig zum Trocknen. Im Anschluss erfolgte das Pressen des Papierfaservlieses. Dafür wurde der Filz-Papierfaservlies-Stapel mit Gewichten beschwert. Gewichte können üblicherweise ab ca. 80 kg (800 N) verwendet werden, hier wurden 200 kg (2000 N) benutzt. Eine maschinell-mechanische Pressung kann hier für eine bessere Qualität und Glätte des Blattes sorgen. Dieser Vorgang wurde so lange wiederholt, bis das Papier trocken war. Dabei wurden die feuchten Filze jeweils durch trockene Filze ersetzt. In der Regel wird eine Press- und Wartezeit von mindestens 60 Minuten angesetzt.

Das handgeschöpfte und getrocknete BAO-Kunstpapier war nun einsatzbereit und konnte verwendet werden.

### Beispiel 2: Handgeschöpfter DINA5 BAO-Kunstkarton für den Künstlerbedarf.

In diesem Beispiel wurde ein Baobab -(BAO)-Kunstpapier aus den Bastfasern der Rinde des Baobabbaumes und den aus dessen Früchten gewonnenen Fasern hergestellt.

### Gewinnung der Baobabbaumrindenbastfasern und -fruchtfasern

Die Baobabbaumrindenbastfasern wurden wie in Beispiel 1 erhalten. Zudem wurden Fasern aus den Früchten gewonnen. Die Fasern befinden sich unterhalb der Schale im Inneren der Frucht und verbinden das Fruchtfleisch mit der Innenseite der Schale. Zudem versorgen sie das Furchtfleisch mit den notwendigen Nährstoffen. Die Früchte wurden per Hand geerntet und mit einem Hammer bzw. harten Schlagwerkzeug aufgebrochen. Im Anschluss wurden die Fruchtfasern von der Schale per Hand getrennt.

Die Bastfasern der Rinde und die Fasern der Fruchtschale wurden zusammen in einem Zerkleinerer zu feinen gleichgroßen Stücken (ca. 1 - 10 mm Streifen) geschnitten und in einem Auffangbecken gesammelt. Unbrauchbare Teile der Schale und weitere unerwünschte Elemente, wie Schlamm und Steine, wurden in einem Wasserbad von den benötigten Fasern getrennt.

### Zerfaserung und Kochen des erhaltenen Faserbreis

Die bereits aufgeweichten Zuschnitte wurden für dieses Beispiel im nächsten Arbeitsschritt in einem Wasserbad mit reichlich Wasser weiter weichgekocht und aufgeschlossen. Für dieses Beispiel waren 250g Rohmaterial der Fasern ausreichend. 250g des zugeschnittenen Rohmaterials wurden in einem Topf mit vier Liter deionisiertem Wasser aufbereitet und gekocht. Die Temperatur der Flüssigkeit wurde bis zum Kochen erhöht. Dadurch erhöhte sich deutlich die Geschwindigkeit des Erweichens und Lösens der Fasern untereinander. Das Erweichen erfolgte bereits ab einer Wassertemperatur von 50°C. Die Temperatur zum Lösen der Fasern lag zwischen 95°C und 115°C und oberhalb von 1 bar Druck im Topf. Die Aufbereitungszeit betrug unter diesen Bedingungen üblicherweise 60 bis 180 Minuten.

### Bleichen des Faserbreis

Zum gelösten und aufgekochten Faserbrei wurde anschließend zusätzlich Bleiche hinzugegeben. Bevorzugt sind umweltschonende Bleichmittel zu verwenden, hier wurde Wasserstoffperoxid (H₂O₂) verwendet. Wasserstoffperoxid ist in Wasser gelöst eine sehr schwache Säure und nicht umweltschädlich. Das Bleichen mit Wasserstoffperoxid war mit einer Lösung von ca. 8-10% ausreichend. In den Topf wurden 200 ml einer 30%igen Lösung mit den vier Litern des oben hergestellten Faserbreis gegeben. Der die Bleiche enthaltende Faserbrei wurde nun zusätzlich aufgewärmt und gekocht. Dabei wurden dieselben Parameter von Zeit, Temperatur und Druck wie beim Aufkochen benutzt. Zur Weiterverarbeitung des Faserbreis wurde das Wasserstoffperoxid aus der Lösung komplett ausgewaschen. Der größte Anteil von Wasserstoffperoxid hatte sich aber bereits durch Lösung im Wasser und dem anschließenden Erhitzen zersetzt.

### Aufbringen des Faserbreis auf ein Sieb

Die weiß gebleichten Fasern wurden nun unter fließendem Wasser in einem Sieb ausgewaschen. Die ausgewaschenen Fasern wurden in ein Wasserbad gelegt und gleichmäßig mit einem Stab oder ähnlichem Gerät verrührt. Das Wasserbad enthielt eine Wanne (sog. Bütte) mit deionisiertem Wasser mit einer Temperatur von 20° bis 23°C. Die Wanne war frei von metallischen Materialien wie Aluminium oder Ähnlichem, da sonst chemische Reaktionen mit dem Restwasserstoffperoxid aus den Fasern hätten entstehen könnten. Geeignet sind somit Wannen aus Kunststoff, vorzugsweise aus Polyethylen (PE). Im Anschluss erfolgte das Handschöpfen. Dafür wurde ein übliches Schöpfsieb, Größe DIN A5 verwendet. Das Schöpfsieb wurde per Hand in die Bütte gesteckt. Beim Herausziehen des Siebes aus der Bütte wurde darauf geachtet, dass der komplette Siebbereich mit Fasern bedeckt und die Masse gleichmäßig überall verteilt war. Nach der Teilentwässerung verblieb auf dem Schöpfsieb ein grobes Papierfaservlies.

### Gautschen / Trocknen und Glätten des Papierfaservlieses

Das gesiebte Papierfaservlies wurde anschließend auf einen Filz gekippt, der mindestens die Abmessungen des Schöpfsiebes hatte. Üblicherweise ist er um ca. 20 % größer. Das gekippte Material wurde dann mit einem weiteren Filz bedeckt. Die Filze dienten zum Aufsaugen der überschüssigen Flüssigkeiten aus dem Papier und somit gleichzeitig zum Trocknen. Im Anschluss erfolgte das Pressen des Papierfaservlieses. Dafür wurde der Filz-Papierfaservlies-Stapel mit Gewichten beschwert. Gewichte können üblicherweise ab ca. 80 kg (800 N) verwendet werden, hier wurden 200 kg (2000 N) benutzt. Eine maschinell-mechanische Pressung kann hier für eine bessere Qualität und Glätte des Blattes sorgen. Dieser Vorgang wurde so lange wiederholt, bis das Papier trocken war. Dabei wurden die feuchten Filze jeweils durch trockene Filze ersetzt. In der Regel wird eine Press- und Wartezeit von mindestens 60 Minuten angesetzt.

Das handgeschöpfte und getrocknete BAO-Kunstpapier war nun einsatzbereit und konnte verwendet werden.

### Beispiel 3: Maschinelle Herstellung von Rollenpappe aus reinen Baobabfasern mit der Papiermaschine

In diesem Beispiel wurde eine Baobab- (BAO)-Rollenpappe aus den Bastfasern der Rinde des Baobabbaumes und den aus dessen Früchten gewonnen Fasern mit Hilfe einer üblichen Papiermaschine hergestellt.

### Gewinnung der Baobabbaumrindenbastfasern & Fruchtfasern

Die Baobabbaumrindenbastfasern und die Baobabfruchtfasern wurden wie in Beispiel 1 und 2 erhalten.

### Zerfaserung der Baobabbaumrindenbastfasern und -fruchtfasern

Die bereits aufgeweichten Zuschnitte werden für dieses Beispiel im nächsten Arbeitsschritt in einem Wasserbad mit reichlich Wasser weiter weichgekocht und aufgeschlossen. Zusätzlich wurden in diesem Beispiel die Fruchtschalen einem Zermahl- und Verkleinerungsprozess unterworfen und zu Pulver verarbeitet. Das Pulver diente hier als Füllstoff, sorgte später für eine höhere Dichte des Papiers und senkte den Bastfaseranteil auf bis zu 45%.

### Kochen des erhaltenen Faserbreis

Die gewonnenen Fasern werden in einem Rührbottich, dem sog. "Pulper", mit reichlich fließendem Wasser vermischt, verrührt und gekocht. Die Zugabe von Wasser während des Verrührens und Vermischens erfolgte so lange, bis sich ein wässriger Papierfaserbrei bildete. Die Lösung wurde zusätzlich 30 Minuten verrührt, um einen homogeneren Papierfaserbrei zu erhalten.

### Aufbringen des Faserbreis auf ein Sieb

Der Papierfaserbrei wurde anschließend durch den Stoffauflauf der Papiermaschine auf einer Siebbahn verteilt. Die Siebbahn wurde dann in der horizontalen Ebene geschüttelt, damit sich die Fasern gleichmäßiger auf dem gesamten Siebbereich verteilten. Ziel des Schüttelns ist es, so viel Wasser wie möglich aus dem aufgetragenen Papierbrei zu entfernen, damit sich die Faserstoffe miteinander verbinden bzw. verfilzen. Das Aufbringen auf die Siebbahn sorgte somit für die erste Trennung zwischen Faserstoff und überschüssigem Wasser und resultierte in einer groben Papierfaservliesbahn. Durch das Schütteln und die Bewegung der Siebbahn wurde dem Papierfaservlies ca. 20 % Wasser entzogen.

### Pressung und Trocknung der groben Papierfaservliesbahn

Um den Restfeuchtigkeitsgrad weiter zu reduzieren, wurden der Papierfaservliesbahn mit Hilfe einer Filzbahn und mechanischer Pressung weitere ca. 15% Feuchtigkeit entzogen. Dadurch wurde eine weitere Versteifung der Papierfaservliesbahn erreicht. Die Papierfaservliesbahn hatte nach der Filzbearbeitung eine Restfeuchte von ca. 65 %. Im darauffolgenden Arbeitsschritt wurde die Papierfaservliesbahn in die Trockenpartie einschließlich eines dampfbeheizten Walzensystems geleitet. Die Geschwindigkeit und Temperatur der Walzen wurden so eingestellt, dass am Ende der Bahn die Pappe eine Restfeuchte von ca. 8-10 % aufwies. Ansonsten wird bei Nichteinhaltung dieser Restfeuchte das Papier bzw. die Pappe sehr spröde und kann nicht mehr aufgerollt werden. Die während des Trocknungsprozesses gebildeten Wasserstoffbrückenbindungen hielten die Fasern fest zusammen. Mit Ende des Trocknungsprozesses wurde eine Papier- bzw. Pappebahn erhalten. Das Aufrollen der Pappebahn erfolgte im letzten Arbeitsbereich der Papiermaschine. Der Papierfaserbrei wurde so auf das Sieb aufgetragen, dass die Pappe eine Grammatur zwischen 100-150 g/m², 150-200g/m², 200-250g/m², 250-300g/m², 300-350g/m² oder 350-400 g/m² aufwies. Aus 100 kg Faserstoff entstanden jeweils drei Rollen zu je ca. 35 kg Rohpappe. Die Rohpapperollen waren anschließend für weitere Veredelungsprozesse wie Streichen und/oder Weiterverarbeitung zur Wellpappe bereit.

### Beispiel 4: Maschinelle Herstellung von Rollenpapier aus reinen Baobabfasern mit der Papiermaschine

In diesem Beispiel wurde Baobab- (BAO)-Rollenpapier aus den Bastfasern der Rinde des Baobabbaumes und den aus dessen Früchten gewonnenen Fasern mit Hilfe einer üblichen Papiermaschine hergestellt.

### Gewinnung der Baobabbaumrindenbastfasern und -fruchtfasern

Die Baobabbaumrindenbastfasern und die Baobabfruchtfasern wurden wie in Beispiel 1 und 2 erhalten.

### Zerfaserung der Baobabbaumrindenbastfasern & Fruchtfasern

Die bereits aufgeweichten Zuschnitte werden für dieses Beispiel im nächsten Arbeitsschritt in einem Wasserbad mit reichlich Wasser weiter weichgekocht und aufgeschlossen. Zusätzlich wurden in diesem Beispiel die Fruchtschalen einem Zermahl- und Verkleinerungsprozess unterworfen und zu Pulver verarbeitet. Das Pulver diente hier als Füllstoff, sorgte später für eine höhere Dichte des Papiers und senkte den Bastfaseranteil auf bis zu 45%.

### Kochen des erhaltenen Faserbreis

Die gewonnenen Fasern wurden in einem Rührbottich, dem sog. "Pulper", mit reichlich fließendem Wasser vermischt, verrührt, gekocht, und durch Zugabe einer Wasserstoffperoxid (H₂O₂) Lösung (ca.10%) gebleicht. Die Zugabe von Wasser während des Verrührens und Vermischens erfolgte so lange, bis sich ein wässriger Papierfaserbrei bildete. Die Lösung wurde zusätzlich 30-90 Minuten verrührt, um die Fasern besser zu lösen und um einen homogeneren Papierfaserbrei einschließlich der Bleiche zu erhalten.

### Aufbringen des Faserbreis auf ein Sieb

Der Papierfaserbrei wurde anschließend durch den Stoffauflauf der Papiermaschine auf einer Siebbahn verteilt. Die Siebbahn wurde dann in der horizontalen Ebene geschüttelt, damit sich die Fasern gleichmäßigem auf dem gesamten Siebbereich verteilen. Ziel des Schüttelns ist es, so viel Wasser wie möglich aus dem aufgetragenen Papierbrei zu entfernen, damit sich die Faserstoffe miteinander verbinden bzw. verfilzen. Das Aufbringen auf die Siebbahn sorgte somit für die erste Trennung zwischen Faserstoff und überschüssigem Wasser und resultierte in einer groben Papierfaservliesbahn. Durch das Schütteln und die Bewegung der Siebbahn wurde dem Papierfaservlies ca. 20 % Wasser entzogen.

### Pressung und Trocknung der groben Papierfaservliesbahn

Um den Restfeuchtigkeitsgrad weiter zu reduzieren, wurden der Papierfaservliesbahn mit Hilfe einer Filzbahn und mechanischer Pressung weitere ca. 15% Feuchtigkeit entzogen. Dadurch wurde eine weitere Versteifung der Papierfaservliesbahn erreicht. Die Papierfaservliesbahn hatte nach der Filzbearbeitung eine Restfeuchte von ca. 65 %. Im darauffolgenden Arbeitsschritt wurde die Papierfaservliesbahn in die Trockenpartie einschließlich eines dampfbeheizten Walzensystems geleitet. Die Geschwindigkeit und Temperatur der Walzen wurden so eingestellt, dass am Ende der Bahn das Papier eine Restfeuchte von ca. 8-10 % aufwies. Ansonsten wird bei Nichteinhaltung dieser Restfeuchte das Papier sehr spröde und kann nicht mehr aufgerollt werden. Die während des Trocknungsprozesses gebildeten Wasserstoffbrückenbindungen hielten die Fasern fest zusammen. Mit Ende des Trocknungsprozesses wurde eine Papierbahn erhalten. Das Aufrollen der Papierbahn erfolgte im letzten Arbeitsbereich der Papiermaschine. Der Papierfaserbrei wurde so auf das Sieb aufgetragen, dass das Papier eine Grammatur zwischen 50-55g/m², 55-60g/m², 60-65g/m², 65-70g/m², 70-75g/m², 75-80g/m² oder 80-90g/m² aufwies. Aus 100 kg Faserstoff entstanden jeweils drei Rollen zu je ca. 35 kg Rohpapier. Die Rohpapierrollen waren anschließend für weitere Veredelungsprozesse wie Streichen und/oder Weiterverarbeitung zur Wellpappe bereit.

### Papierstreichen

Ziel des Papierstreichens ist es, Papier mit möglichst hohem Weißegrad und hohem Glanz zu erhalten. Üblicherweise erfolgt das Papierstreichen sowohl auf sogenannten Off-Line-Streichmaschinen als auch online in direkter Verbindung mit einer Papiermaschine. In diesem Beispiel wurde das Off-Line-Verfahren einer Streichmaschine mit einem Blade-Streichsystem verwendet. Diese war genau auf die Rollenbreite angepasst. Die verwendeten Rohstoffe für das Streichmaterial kann man in folgende Kategorien einteilen:
1.) Pigmente: Calciumcarbonat (CaCO₃), Kaolinit (Al₄[(OH)₈|Si₄O₁₀]);
2.) Bindemittel: Modifizierte Stärke, Carboxymethylcellulose (CMC), Polyvinylalkohol (PVA), Styrol-Butadien-Latex, Styrol-Acrylat-Latex, Acrylsäureester, carboxyliertes Acrylat-Mischpolymerisat;
3.) Hilfsstoffe: assoziativer Verdicker, Calciumstearat, optischer Aufheller, Natronlauge.

Für das Anmischen der Streichfarbe wurde folgende Rezeptur verwendet: 250 ml Pigmentschlämme (Trockengehalt 78%, Menge 195 g), 100 Teile Calciumcarbonat: 195 g (entspricht 94,7%); 1 Teil CMC: 2 g (entspricht 0,95%); 2 Teile Styrol-Butadien-Latex: 4 g (entspricht 1,9%); 2 Teile Styrol-Acrylat-Latex: 4 g (entspricht 1,9%); 0,5 Teile Calcium-Stearat: 1 g (entspricht 0,47%).

Die Rolle wurde in die Hülse der Streichmaschine eingespannt. Die Hülsenaufnahme mit leerer Papierrolle für das Aufnehmen der abgewickelten und frisch gestrichenen Papierrolle wurde zeitgleich eingestellt. Eine elastische Streichrakel wurde mit Streichfarbe gefüllt und der Streichspalt wurde so eng wie möglich an der Bahn angebracht. Die elastische Streichrakel dosierte und egalisierte den Strich dadurch, dass es den Streichmassen-Überschuss zurückstaute und in den Streichmassentrog wieder zurückfließen ließ. Durch Verwendung einer schartenfrei geschliffenen Rakelklinge wurde die Streichfarbe über die ganze Bahnbreite gleichmäßig verteilt. Das gestrichene Papier hatte nun einen höheren Weißegrad als das Rohpapier. Ebenso hatten sich der Glanz, die Glätte und die Opazität im Vergleich zum Rohpapier enorm gesteigert.

### Beispiel 5: Herstellung eines handgeschöpftes DINA4 Kunstmischpapieres aus Baobab- und Altpapierfasern (Verhältnis 50:50).

In diesem Beispiel wurde ein Baobab (BAO)-Kunstpapier sowohl aus Baobabrohstoff, bestehend aus Baobabbaumrindenbastfasern und Baobabfruchtfasern, sowie aus recycelten Fasern aus Altpapier hergestellt. In diesem Beispiel wurden 50% (100 g) der reinen Baobabfasern mit 50% (100 g) Altpapierfasern in Form von alten Zeitungen vermischt.

### Gewinnung der Baobabbaumrindenbastfasern und -fruchtfasern

Die Baobabbaumrindenbastfasern und Baobabfruchtfasern wurden wie in den vorhergehenden Beispielen gewonnen.

### Zerfaserung und Kochen des erhaltenen Faserbreis

Die bereits aufgeweichten Zuschnitte wurden für dieses Beispiel im nächsten Arbeitsschritt in einem Wasserbad mit reichlich Wasser weiter weichgekocht und aufgeschlossen. Für dieses Beispiel waren 200 g Rohmaterial ausreichend. 100 g der Faserzuschnitte wurden in einem Topf mit 100 g Altpapier in 3 Liter deionisiertem Wasser aufbereitet und gekocht. Die Temperatur der Flüssigkeit wurde bis zum Kochen erhöht. Dadurch erhöhte sich die Geschwindigkeit des Erweichens und Lösens der Fasern untereinander deutlich. Das Erweichen erfolgte bereits ab einer Wassertemperatur von 50°C. Die bevorzugte Temperatur zum Lösen der Fasern lag zwischen 95°C und 115°C und oberhalb von 1 bar Druck im Topf. Die Aufbereitungszeit betrug unter diesen Bedingungen 60 bis 180 Minuten.

### Bleichen des Faserbreis

Zum gelösten und aufgekochten Faserbrei wurde anschließend zusätzlich Bleiche hinzugegeben. Bevorzugt sind umweltschonende Bleichmittel zu verwenden, hier wurde Wasserstoffperoxid (H₂O₂) verwendet. Wasserstoffperoxid ist in Wasser gelöst eine sehr schwache Säure und nicht umweltschädlich. Das Bleichen mit Wasserstoffperoxid war mit einer Lösung von 7% ausreichend. In den Topf wurden 100 ml einer 30%igen Lösung mit den 3 Litern des oben hergestellten Faserbreis gegeben. Der die Bleiche enthaltende Faserbrei wurde nun zusätzlich aufgewärmt und gekocht. Dabei wurden dieselben Parameter von Zeit, Temperatur und Druck wie beim Aufkochen benutzt. Zur Weiterverarbeitung des Faserbreis wurde das Wasserstoffperoxid aus der Lösung komplett ausgewaschen. Der größte Anteil von Wasserstoffperoxid hatte sich aber bereits durch Lösung im Wasser und dem anschließenden Erhitzen zersetzt.

### Aufbringen des Faserbreis auf ein Sieb

Die weiß gebleichten Fasern wurden nun unter fließendem Wasser in einem Sieb ausgewaschen. Die ausgewaschenen Fasern wurden in ein Wasserbad gelegt und gleichmäßig mit einem Stab oder ähnlichem Gerät verrührt. Das Wasserbad enthielt eine Wanne (sog. Bütte) mit deionisiertem Wasser mit einer Temperatur von 20° bis 23°C. Die Wanne war frei von metallischen Materialien wie Aluminium oder Ähnlichem, da sonst chemische Reaktionen mit dem Restwasserstoffperoxid von den Fasern hätten entstehen könnten. Geeignet sind somit Wannen aus Kunststoff, vorzugsweise aus Polyethylen (PE). Im Anschluss erfolgte das Handschöpfen. Dafür wurde in übliches Schöpfsieb, Größe DIN A4 verwendet. Das Schöpfsieb wurde per Hand in die Bütte gesteckt. Beim Herausziehen des Siebes aus der Bütte wurde darauf geachtet, dass der komplette Siebbereich mit Fasern bedeckt und die Masse gleichmäßig überall verteilt war. Nach der Teilentwässerung verblieb auf dem Schöpfsieb ein grobes Papierfaservlies.

### Gautschen / Trocknen und Glätten des Papierfaservlieses

Das gesiebte Papierfaservlies wurde anschließend auf einen Filz gekippt, der mindestens die Abmessungen des Schöpfsiebes hatte. Üblicherweise ist er um ca. 20 % größer. Das gekippte Material wurde dann mit einem weiteren Filz bedeckt. Die Filze dienten zum Aufsaugen der überschüssigen Flüssigkeiten aus dem Papier und somit gleichzeitig zum Trocknen. Im Anschluss erfolgte das Pressen des Papierfaservlieses. Dafür wurde der Filz-Papierfaservlies-Stapel mit Gewichten beschwert. Gewichte können üblicherweise ab ca. 80 kg (800 N) verwendet werden, hier wurden 200 kg (2000 N) benutzt. Eine maschinell-mechanische Pressung kann hier für eine bessere Qualität und Glätte des Blattes sorgen. Dieser Vorgang wurde so lange wiederholt, bis das Papier trocken war. Dabei wurden die feuchten Filze jeweils durch trockene Filze ersetzt. In der Regel wird eine Press- und Wartezeit von mindestens 60 Minuten angesetzt.

Das handgeschöpfte und getrocknete BAO-Kunstpapier war nun einsatzbereit und konnte verwendet werden.

## Patentansprüche

1. Verfahren zur Herstellung von Papier, Pappe oder Karton, das Verfahren umfassend die Schritte:
a) Gewinnung von Baobabfruchtfaser und Baobabbaumrindenbastfaser und/oder Natalfeigenbastfaser als Baumrohstoff, wobei der Baumrohstoff mindestens 5% Baobabfruchtfaser enthält,
b) Zerfasern des Baumrohstoffs aus Schritt a) unter Zugabe von Wasser,
c) Erhitzen und vorzugsweise Bleichen des in Schritt b) erhaltenen Faserbreis,
d) Aufbringen des Faserbreis auf ein Siebmittel einschließlich Entfernen eines Teils des zugeführten Wassers, um ein Papierfaservlies zu erzeugen,
e) Pressen des in Schritt d) erhaltenen Papierfaservlieses, und
f) Trocknen des in Schritt e) erhaltenen Papierfaservlieses.

2. Das Verfahren von Anspruch 1, wobei der Baumrohstoff aus Baobabbaumrindenbastfaser und Baobabfruchtfaser besteht.

3. Das Verfahren von Anspruch 1, wobei der Baumrohstoff aus Baobabbaumrindenbastfaser und Baobabfruchtfaser und Natalfeigenbastfaser besteht.

4. Das Verfahren von Anspruch 1, wobei der Baumrohstoff aus Baobabfruchtfaser und Natalfeigenbastfaser besteht.

5. Das Verfahren von einem der Ansprüche 1-3, wobei die Baobabbaumrindenbastfaser durch Schälen des Baobabbaumrindenbasts vom Baobabbaum erhalten wird.

6. Das Verfahren von einem der Ansprüche 1, 3 oder 4, wobei die Natalfeigenbastfaser durch Schälen des Natalfeigenbasts vom Natalfeigenbaum erhalten wird.

7. Das Verfahren von einem der vorhergehenden Ansprüche, wobei einer der Schritte b) - c) Beimischen von konventionellen Papierrohstoffen und/oder Altpapier bzw. Beimischen des daraus gewonnen Faserbreis umfasst; und/oder wobei das Verfahren weiter einen Schritt g) umfasst, der die Weiterverarbeitung des in Schritt f) erhaltenen Papierfaserprodukts zu Pappe oder Karton umfasst.

8. Das Verfahren von einem der Ansprüche 1-3 oder 5-7, wobei der Baumrohstoff aus Schritt a) mindestens 55%, 60%, 70%, 75%, 80%, 85%, 90% oder 95% Baobabbaumrindenbastfaser enthält.

9. Das Verfahren von einem der vorhergehenden Ansprüche, wobei:
i) Schritt c) weiter Zumischen von Hilfsmitteln, wie Leime, Bindemittel, Stärke, Wachse und Farbstoffe umfasst; und/oder
ii) Schritt f) weiter Streichen des Papierfaserprodukts mit Kalk umfasst; und/oder
iii) Schritt c) die Entfernung von Lignin umfasst; und/oder
iv) das Verfahren keine Entfernung von Lignin umfasst.

10. Das Verfahren von einem der Ansprüche 7-9, wobei das Verhältnis Baumrohstoff zu konventionellen Papierrohstoffen/Altpapier in der Papierrohstoffmischung 9,5:0,5, 9:1, 8:2, 7:3, 6:4, 1:1, 4:6, 3:7, 2:8, 1:9 oder 0,5:9.5 ist, und/oder wobei die konventionellen Papierrohstoffe eines oder mehr aus Baumwolle, Eukalyptus-, Buchen-, Pappel-, Birken-, Kiefern-, Fichten-, Tannen- und Lärchenholz umfassen.

11. Das Verfahren von einem der vorhergehenden Ansprüche, wobei
a) die Baobabbaumrindenbastfaser und/oder Baobabfruchtfaser von ein oder mehr Baobabbäumen gewonnen wird, die der Art *Adansonia grandidieri, Adansonia madagascariensis, Adansonia perrieri, Adansonia rubrostipa* (*Adansonia fony*), *Adansonia suarezensis, Adansonia Za., Adansonia digitata, Adansonia kilima,* oder *Adansonia gregori* (*Adansonia gibbosa*) angehören; und/oder
b) die Rohstoffgewinnung in Schritt a) kein Absterben des Baobabbaumes und/oder Natalfeigenbaums zur Folge hat.

12. Papier, Pappe oder Karton, erhalten durch ein Verfahren aus irgendeinem der vorhergehenden Ansprüche, wobei die Papierfaser
(i) ausschließlich aus Baobabbaumfaser,
(ii) aus mindestens 5%, 10%, 20%, 30%, 40%, 50%, 60%, 70%, 80%, 90%, 95% oder mehr Baobabbaumfaser, und/oder
(iii) aus mindestens 5%, 10%, 20%, 30%, 40%, 50%, 55%, 60%, 70%, 80%, 90% oder 95% Natalfeigenbastfaser
besteht, und wobei der Baumrohstoff mindestens 5% Baobabfruchtfaser enthält.

13. Verwendung des Papiers, Pappe oder Kartons aus Anspruch 12 zur Herstellung von Naturpapier; Pappmaché; Kunstpapier; Hygienepapier; Taschentuchpapier; grafische Papiere; Papier, Karton oder Pappe für Verpackungszwecke; oder Papier für spezielle technische Verwendungszwecke.

## Claims

1. Process for manufacturing paper, cardboard or carton, the process comprising the steps of:
a) obtaining baobab fruit fiber and baobab bark bast fiber and/or Natal fig bast fiber as a tree raw material, wherein the tree raw material contains at least 5% of baobab fruit fiber,
b) defibering the tree raw material of step a) while adding water,
c) heating and preferably bleaching the fiber pulp obtained in step b)
d) applying the fiber pulp on sieving means including removing a fraction of the added water to create a non-woven fabric of paper fiber,
e) pressing the non-woven fabric of paper fiber obtained in step d), and
f) drying the non-woven fabric of paper fiber obtained in step e).

2. The process of claim 1, wherein the tree raw material consists of baobab bark bast fiber and baobab fruit fiber.

3. The process of claim 1, wherein the tree raw material consists of baobab bark bast fiber and baobab fruit fiber and Natal fig bast fiber.

4. The process of claim 1, wherein the tree raw material consists of baobab fruit fiber and Natal fig bast fiber.

5. The process of any of claims 1-3, wherein the baobab bark bast fiber is obtained by peeling the baobab bark bast off the baobab tree.

6. The process of any of claims 1, 3 or 4, wherein the Natal fig bast fiber is obtained by peeling the Natal fig bast off the Natal fig tree.

7. The process of any of the preceding claims, wherein one of the steps b) - c) comprises adding conventional paper raw materials and/or used paper and adding the fiber pulp obtained therefrom, respectively; and/or wherein the process further comprises step g) which comprises processing the paper fiber product obtained in step f) to obtain cardboard or carton.

8. The process of any of claims 1-3 or 5-7, wherein the tree raw material of step a) contains at least 55%, 60%, 70%, 75%, 80%, 85%, 90% or 95% of baobab bark bast fiber.

9. The process of any of the preceding claims, wherein:
i) step c) further comprises adding auxiliary materials, such as glues, binding agents, starch, waxes and dyes; and/or
ii) step f) further comprises painting the paper fiber product with lime; and/or
iii) step c) comprises removing lignin; and/or
iv) the process does not comprise removing lignin.

10. The process of any of claims 7-9, wherein the ratio of tree raw material to conventional paper raw materials/used paper in the paper raw material mixture is 9.5:0.5, 9:1, 8:2, 7:3, 6:4, 1:1, 4:6, 3:7, 2:8, 1:9 or 0.5:9.5, and/or wherein the conventional paper raw materials comprise one or more from: cotton, eucalyptus, beech, poplar, birch, pine, spruce, fir, and larch wood.

11. The process of any of the preceding claims, wherein
a) the baobab bark bast fiber and/or baobab fruit fiber is obtained from one or more baobab trees which belong to the species *Adansonia grandidieri, Adansonia madagascariensis, Adansonia perrieri, Adansonia rubrostipa* (*Adansonia fony*), *Adansonia suarezensis, Adansonia Za., Adansonia digitata, Adansonia kilima,* or *Adansonia gregori* (*Adansonia gibbosa*); and/or
b) obtaining the raw material in step a) does not result in perishing of the baobab tree or the Natal fig tree.

12. Paper, cardboard or carton, obtained by a process of any of the preceding claims, wherein the paper fiber consists of
(i) exclusively baobab tree fiber,
(ii) at least 5%, 10%, 20%, 30%, 40%, 50%, 60%, 70%, 80%, 90%, 95% or more of baobab tree fiber, and/or
(iii) at least 5%, 10%, 20%, 30%, 40%, 50%, 55%, 60%, 70%, 80%, 90% or 95% Natal fig bast fiber, and wherein the tree raw material contains at least 5% baobab fruit fiber.

13. Use of the paper, cardboard or carton of claim 12 for manufacturing natural paper; papier mâché; art paper; hygienic paper; tissue paper; graphical papers; paper, carton or cardboard for packaging; or paper for special technical purposes.

## Revendications

1. Procédé servant à fabriquer du papier, du carton-pâte ou du carton, le procédé comprenant les étapes :
a) d'obtention de fibre de fruit de baobab et de fibre libérienne d'écorce de baobab et/ou de fibre libérienne de Ficus natalensis en tant que matière première d'arbre, dans lequel la matière première d'arbre contient au moins 5 % de fibre de fruit de baobab,
b) de défibrage de la matière première d'arbre de l'étape a) en ajoutant de l'eau,
c) de chauffage et de préférence de blanchiment de la bouillie fibreuse obtenue à l'étape b),
d) d'application de la bouillie fibreuse sur un moyen de tamisage y compris de suppression d'une partie de l'eau amenée pour générer un matériau non-tissé à base de fibres de papier,
e) de pressage du matériau non-tissé à base de fibres de papier obtenu à l'étape d), et
f) de séchage du matériau non-tissé à base de fibres de papier obtenu à l'étape e).

2. Procédé selon la revendication 1, dans lequel la matière première d'arbre est constituée de fibre libérienne d'écorce de baobab et de fibre de fruit de baobab.

3. Procédé selon la revendication 1, dans lequel la matière première d'arbre est constituée de fibre libérienne d'écorce de baobab et de fibre de fruit de baobab et de fibre libérienne de Ficus natalensis.

4. Procédé selon la revendication 1, dans lequel la matière première d'arbre est constituée de fibre de fruit de baobab et de fibre libérienne de Ficus natalensis.

5. Procédé selon l'une quelconque des revendications 1-3, dans lequel la fibre libérienne d'écorce de baobab est obtenue par écorçage du liber d'écorce de baobab du baobab.

6. Procédé selon l'une quelconque des revendications 1, 3 ou 4, dans lequel la fibre libérienne de Ficus natalensis est obtenue par écorçage du liber de Ficus natalensis du Ficus natalensis.

7. Procédé selon l'une quelconque des revendications précédentes, dans lequel une des étapes b) - c) comprend le mélange de matières premières de papier conventionnelles et/ou de vieux papier ou le mélange de la bouillie fibreuse obtenue à partir de ceux-ci ; et/ou dans lequel le procédé comprend en outre une étape g), qui comprend la transformation ultérieure du produit à base de fibres de papier obtenu à l'étape f) en carton-pâte ou en carton.

8. Procédé selon l'une quelconque des revendications 1-3 ou 5-7, dans lequel la matière première d'arbre de l'étape a) contient au moins 55 %, 60 %, 70 %, 75 %, 80 %, 85 %, 90 %, ou 95 % de fibre libérienne d'écorce de baobab.

9. Procédé selon l'une quelconque des revendications précédentes, dans lequel :
i) l'étape c) comprend en outre l'ajout par mélangeage de produits auxiliaires, tels que colles, liants, amidon, cires et colorants ; et/ou
ii) l'étape f) comprend en outre l'enduction du produit à base de fibres de papier avec de la chaux ; et/ou
iii) l'étape c) comprend la suppression de lignine ; et/ou
iv) le procédé ne comprend pas la suppression de lignine.

10. Procédé selon l'une quelconque des revendications 7-9, dans lequel le rapport entre la matière première d'arbre et les matières premières de papier conventionnelles/vieux papier dans le mélange de matière première de papier est de 9,5:0,5, 9:1, 8:2, 7:3, 6:4, 1:1, 4:6, 3:7, 2:8, 1:9 ou 0,5:9,5, et/ou dans lequel les matières premières de papier conventionnelles comprennent un ou plusieurs parmi le coton, le bois d'eucalyptus, de hêtre, de peuplier, de bouleau, de pin, d'épicéa, de sapin et de mélèze.

11. Procédé selon l'une quelconque des revendications précédentes, dans lequel
a) la fibre libérienne d'écorce de baobab et/ou la fibre de fruit de baobab sont obtenues à partir d'un ou de plusieurs baobabs, qui font partie de l'espèce *Adansonia grandidieri, Adansonia madagascariensis, Adansonia perrieri, Adansonia rubrostipa (Adansonia fony), Adansonia suarezensis, Adansonia Za., Adansonia digitata, Adansonia kilima* ou *Adansonia gregori (Adansonia gibbosa)* ; et/ou
b) l'obtention de matière première à l'étape a) n'a pas pour conséquence le dépérissement du baobab et/ou du Ficus natalensis.

12. Papier, carton-pâte ou carton, obtenu par un procédé selon l'une quelconque des revendications précédentes, dans lequel la fibre de papier est constituée
(i) exclusivement de fibre de baobab,
(ii) d'au moins 5 %, 10 %, 20 %, 30 %, 40 %, 50 %, 60 %, 70 %, 80 %, 90 %, 95 % ou plus de fibre de baobab, et/ou
(iii) d'au moins 5 %, 10 %, 20 %, 30 %, 40 %, 50 %, 55 %, 60 %, 70 %, 80 %, 90 %, 95 % de fibre de Ficus natalensis,
et dans lequel la matière première d'arbre contient au moins 5 % de fibre de fruit de baobab.

13. Utilisation du papier, du carton-pâte ou du carton issu de la revendication 12 pour fabriquer du papier naturel ; du papier mâché ; du papier artistique ; du papier hygiénique ; du papier pour mouchoir ; des papiers graphiques ; du papier, du carton ou du carton-pâte à des fins d'emballage ; ou du papier aux fins d'utilisations techniques spécifiques.
